# EUROPÄISCHE PATENTSCHRIFT

(11) **EP 0 665 561 B1**
(45) Veröffentlichungstag und Bekanntmachung des Hinweises auf die Patenterteilung: **09.07.1997**
(21) Anmeldenummer: 94101372.4
(22) Anmeldetag: 31.01.1994
(51) Int. Cl.: H01F 38/30

(54) **Ringkernstromwandler zum Einbau in eine metallgekapselte Hochspannungsschaltanlage**
Current transformer with annular core to be built in a metal cast high-tension switchgear installation
Transformateur de courant à noyau annulaire destiné à être monté dans une installation de commutation à haute tension encapsulée en métal

(43) Veröffentlichungstag der Anmeldung: 02.08.1995
(73) Patentinhaber: GEC ALSTHOM T&D AG, 5036 Oberentfelden (CH)
(72) Erfinder: Lacher, Walter, CH-5004 Aarau (CH); Gimeno, Carmelo, CH-5004 Aarau (CH); Tschannen, Christian, CH-5035 Unterentfelden (CH)
(74) Vertreter: Morva, Tibor

(56) Entgegenhaltungen:
- EP-A- 0 063 636
- DE-A- 1 638 626
- DE-A- 1 807 996
- DE-A- 1 931 358
- DE-A- 2 728 191
- DE-A- 2 945 401

## Beschreibung

Die vorliegende Erfindung betrifft einen Ringkernstromwandler zum Einbau in eine metallgekapselte Hochspannungsschaltanlage mit mindestens einem mit Sekundärwicklung versehenen innerhalb der Kapselung angeordneten Ringkern und einem in der Oeffnung des Ringkernes verlaufenden Primärleiter, wobei zwischen dem Ringkern und dem Primärleiter ein am einen Ende mit der Kapselung elektrisch leitend verbundenes und an den übrigen Stellen davon elektrisch isoliertes, inneres Rohr und eine an der der elektrischen Verbindungsstelle zwischen der Kapselung und dem inneren Rohr abgekehrten Seite des Ringkernes mit der Kapselung direkt elektrisch leitend verbundene, das innere Rohr mindestens teilweise überlappende, elektrisch leitende Schicht vorgesehen sind, wobei der Ueberlappungsteil der leitenden Schicht, eine darunterliegende Isolation und das innere Rohr einen Kondensator mit einer für das ungehinderte Weiterleiten steiler Wanderwellen ausreichenden Kapazität bilden.

Aus der EP-B2-0063636 ist ein Ringkernstromwandler der eingangs erwähnten Art bekannt. Bei dieser Anordnung liegt zwischen einem in der Oeffnung des Ringkernes verlaufenden Primärleiter und dem Ringkern ein am einen Ende mit der Kapselung elektrisch leitend verbundenes und an den übrigen Stellen davon elektrisch isoliertes, inneres Rohr, das durch einen am anderen Ende des inneren Rohres mit der Kapselung verbundenen Abschirmkörper davon elektrisch isoliert umgeben ist. Zwischen dem inneren Rohr und dem Abschirmkörper ist eine relativ dickwandige Isolation vorhanden, die entweder durch ein eingeschobenes Formteil oder durch Vergiessen von Isoliermaterial gebildet ist. Die zwischen dem inneren Rohr und dem Abschirmkörper vorhandene Kapazität sollte steile Wanderwellen mit Frontzeiten von 2 bis 300 ns durchlassen. Solche steile Wanderwellen können in einer gekapselten Schaltanlage entstehen, wenn beispielsweise ein spannungsloser, eine kleine Kapazität aufweisender Anlagenteil mittels eines Trennschalters einer unter Spannung stehenden Anlage zugeschaltet wird, oder wenn beim Unterbrechen eines kleinen kapazitiven Stromes Rück- oder Wiederzündungen entstehen. Die zwischen dem inneren Rohr und dem Abschirmkörper vorhandene Kapazität soll durch Bildung einer für hohe Frequenzen wirksamen Kurzschlusswindung verhindern, dass in der Sekundärwicklung des Stromwandlers durch die steilen Wanderwellen hohe Ueberspannungen induziert werden. Die Ueberlappungsstelle zwischen dem inneren Rohr und dem Abschirmkörper ist anderseits für steile Wanderwellen eine Längskupplung. Die Wanderwelle wird bei dieser Anordnung an den äusseren Oberflächen des Innenleiters und an der inneren Oberfläche der Kapselung resp. des inneren Rohres und des Abschirmkörpers geführt. Eine Koppelung zwischen der Wanderwelle und der Sekundärwicklung besteht hier, wenn überhaupt, nur sehr schwach. Am inneren Rohr wird hier auch keine Reflexion der Wanderwellen auftreten, was auch zu Verringerung der durch kapazitive Koppelung bedingte Potentialerhöhung der Sekundärwicklung beiträgt. Man hat bei dieser Ausführung der Ringkernstromwandler festgestellt, dass die Herstellung der zwischen dem inneren Rohr und dem Abschirmkörper liegenden Isolationsschicht zu hohe Genauigkeiten verlangt, wenn es sich um einen Formkörper handelt und teuere Werkzeuge erfordert, wenn die Isolationsschicht durch Vergiessen von Isoliermaterial hergestellt werden soll. Ausserdem hat man festgestellt, dass die zwischen dem inneren Rohr und dem Abschirmkörper erreichbare Kapazität in vielen Fällen zu gering ist, um den Stromwandler gegen den Einfluss von steilen Wanderwellen zufriedenstellend schützen zu können.

Die DE-A-2728191 beschreibt einen Hochspannungsstromwandler des sogenannten Kopfkerntyps. Die mit Sekundärwicklungen bewickelten ringförmigen Eisenkerne des Stromwandlers sind in eine metallische, Erdpotential aufweisende Kernkapsel eingeschlossen und in einem von der Kernkapsel isolierten Kopfgehäuse aus Metall untergebracht. Der hochspannungführende Primärleiter ist durch das Kopfgehäuse und durch die Kernkapsel zentrisch geführt. Zwischen dem Primärleiter und dem Kopfgehäuse ist eine Potential verbindung vorhanden. Zwischen einem den Primärleiter führenden Rohr und der Kernkapsel ist eine gewickelte Kondensatordurchführung und zwischen der Kernkapsel und dem Kopfgehäuse sind in den von der Kernkapsel in axialer Richtung liegenden ringförmigen Bereichen mehrere isolierte Metallringe vorgesehen, die in diesen Bereichen eine gleichmässige Spannungsverteilung bewirken sollen. Die Kernkapsel ist an zwei Stellen durch elektrisch isolierende Stützringe unterbrochen, um eine Kurzschlusswindung um die Eisenkerne zu verhindern. Da dieser Hochspannungsstromwandler für Freiluftaufstellung vorgesehen ist und das in sich geschlossene Kopfgehäuse auf einem Stützisolator befestigt ist, sind keine besonderen Massnahmen erforderlich, um die hier nicht vorhandene nachteilige Wirkung von steilen Wanderwellen zu verhindern.

Aus der DE-A-2945401 ist ein Verfahren zur Entfernung eines Randbereiches einer auf einem Isolierstoffolienband befindlichen Metallschicht bekannt. Das vorzugsweise aus Kunststoff bestehende und nach dem Verfahren vorbereitete, biegsame, mit Metall beschichtete Isolierstoffolienband kann zur Herstellung von Wickelkondenstoren verwendet werden. Auf die Herstellung von Stromwandlern in gekapselten Hochspannungsanlagen gibt es hier keine Hinweise.

Die DE-A-1638626 betrifft einen giessharzisolierten Hochspannungsstromwandler des sogenannten Kopfkerntyps für Freiluftaufstellung. Bei diesem Stromwandler wird die Potentialverteilung entlang des Stützisolators mittels in die Giessharzisolation eingebetteter Kondensatorbeläge und daran angeschlossener Potentialsteuerringe gesteuert. Die Kondensatorbeläge können aus einem Metallgewebe, aus einem gelochten Blech, aus leitend gemachten Folien oder Faserstoffen oder aus anderen Materialien bestehen. Das Kopfgehäuse ist zwecks Vermeidung einer Kurzschlusswindung um die Stromwandlerkerne mit einem Spalt versehen. Da dieser Freiluftstromwandler bei steilen Wanderwellen keine besondere Probleme verursacht, ist die einfache elektrische Isolierung des Spaltes im Kopfgehäuse ausreichend.

Die Aufgabe der vorliegenden Erfindung ist es, einen Ringkernstromwandler zum Einbau in einer metallgekapselten Hochspannungsschaltanlage der eingangs erwähnten Art vorzuschlagen, bei welcher der Stromwandler gegen den Einfluss von steilen Wanderwellen durch einen einfach herstellbaren Kondensator mit ausreichender Kapazität geschützt werden kann und einfach montierbar ist.

Die gestellte Aufgabe ist dadurch gelöst, dass der auf diese Weise gebildete Kondensator mindestens eine auf das innere Rohr aufgewickelte Isolationsschicht und mindestens eine darauf aufliegende und aufgewickelte biegsame elektrisch leitende Schicht aufweist, wobei auf der innersten elektrisch leitenden Schicht des Kondensators zum Anschluss dieser elektrisch leitenden Schicht an die äussere Kapselung am der Verbindungsstelle zwischen der inneren Kapselung und dem inneren Rohr abgekehrten Teil der elektrisch leitenden Schicht eine Kontaktfeder angebracht ist. Durch die Verwendung eines derartigen Kondensators kann zwischen den unter dem Stromwandlerkern getrennten Kapselungsteilen eine ausreichende Kapazität erreicht werden, um den Stromwandler gegen den Einfluss von steilen Wanderwellen wirksam zu schützen. Der Kondensator ist einfach herstellbar und bedarf keiner kostspieligen Einrichtungen. Die auf der elektrisch leitenden Schicht des Kondensators aufgebrachte, zum Anschluss dieser Schicht am der Verbindungsstelle zwischen der inneren Kapselung und dem inneren Rohr abgekehrten Teil der äusseren Kapselung dienende Kontaktfeder ermöglicht eine einfache Montage des Stromwandlers. Die beiden Gehäuseteile können dabei einfach ineinandergesteckt werden.

Die Isolationsschicht kann mit Vorteil aus einer mindestens einlagig gewickelten Polyesterfolie bestehen. Der Selbstheilungseffekt des Kondensators ist besonders wirksam bei der Verwendung einer Polyesterfolie als gewickelte Isolationsschicht des Kondensators. Der Selbstheilungseffekt verhindert nach einem allfälligen Durchschlag in der Isolationsschicht ein dauerhaftes Leitendwerden dieser Isolationsschicht. So wird ausgeschlossen, dass der Sekundärstrom des Stromwandlers durch eine unbemerkt leitend gewordene Stelle in der Isolationsschicht und eine dadurch entstehende Kurzschlusswindung unzulässigerweise beeinflusst wird.

Die elektrisch leitende Schicht ist vorteilhafterweise ein Metallgeflecht. Ein Metallgeflecht begünstigt den Selbstheilungseffekt des Kondensators.

Die elektrisch leitende Schicht kann auch eine Metallfolie sein. Die Verwendung einer Metallfolie als elektrisch leitende Schicht des Kondensators ist vorteilhaft in der Herstellung und ergibt einen guten Selbstheilungseffekt.

Der Kondensator weist mit Vorteil mehrere abwechslungsweise aufgewickelte Isolationsschichten und darauf aufliegende und aufgewickelten elektrisch leitende Schichten auf, wobei die innerste und jede zweite darauf aufliegende elektrisch leitende Schicht einerseits untereinander und anderseits mit einer der elektrischen Verbindungsstelle zwischen einer inneren Kapselung und dem inneren Rohr abgekehrten äusseren Kapselung und die übrigen elektrisch leitenden Schichten mit dem inneren Rohr elektrisch leitend direkt verbunden sind. Diese Massnahme erlaubt die Verwendung von mehreren parallelgeschalteten Kondensatoren und dadurch die Erhöhung der zwischen den unter dem Stromwandlerkern getrennten Kapselungsteilen liegenden Gesamtkapazität. Die Schutzwirkung dieser Anordnung ist besonders vorteilhaft gegen den Einfluss von steilen Wanderwellen auf den Stromwandler.

Das der elektrischen Verbindungsstelle zwischen der inneren Kapselung und dem inneren Rohr abgekehrte Ende des inneren Rohres kann mit der gegenüberliegenden äusseren Kapselung eine Schutzfunkenstrecke bilden, deren Ansprechspannung unterhalb der Spannungsfestigkeit der durch die Schutzfunkenstrecke überbrückten Isolationsschicht des Kondensators liegt. Die Schutzfunkenstrecke hilft eine allfällige unbemerkte Beschädigung der Isolationsschicht des Kondensators zu verhindern. Dadurch wird ein unzulässiger durch eine unbemerkte Kurzschlusswindung verursachter Messfehler des Stromwandlers vermieden. Um die Wirksamkeit der Schutzfunkenstrecke sicherzustellen, liegt die Ansprechspannung der Schutzfunkenstrecke zwischen 15% und 30 % der Spannungsfestigkeit der überbrückten Isolationsschicht.

Die zwischen der zum Anschluss der innersten elektrisch leitenden Schicht an die äussere Kapselung am der Verbindungsstelle zwischen der inneren Kapselung und dem inneren Rohr abgekehrten Teil der elektrisch leitenden Schicht vorgesehenen, innersten elektrisch leitenden Schicht des Kondensators und der äusseren Kapselung liegende Kontaktfeder ist vorteilhafterweise selbstklebend auf die innerste Schicht aufgebracht. Diese konstruktive Massnahme ermöglicht eine einfache Montage der Kontaktfeder.

Mindestens eine Isolationsschicht des Kondensators ist vorteilhafterweise durch einen ohm'schen Widerstand überbrückt. Die Induktivität des um den Stromwandlerkern liegenden Gehäuses und die Kapazität des angebrachten Kondensators bilden ein schwingfähiges Gebilde. Durch eine allfällige Resonanz dieses Schwingkreises können unzulässig hohe Ueberspannungen auftreten. Durch den vorgesehenen ohm'schen Widerstand können die Resonanzschwingungen gedämpft werden. Vorteilhafterweise liegt der Wert des ohm'schen Widerstandes zwischen 5 und 60 Ohm. Der ohm'sche Widerstand kann aus einem über das unisoliert vorstehende Ende der elektrisch leitenden Schicht des Kondensators und über das innere Rohr angebrachten und diese verbindenden halbleitenden Material bestehen. Es ist auch möglich, dass der mindestens eine Isolierschicht überbrückende ohm'sche Widerstand aus mehreren am Umfang gleichmässig verteilten Metallschichtwiderständen besteht.

Im folgenden werden anhand der beiliegenden Zeichnungen Ausführungsbeispiele der Erfindung näher beschrieben. Es zeigen:
- Fig. 1: einen Ringkernstromwandler mit einer Kapselung in Längsschnitt,
- Fig.2: Bereich "A" aus Fig.1 in Vergrösserung mit einer einzigen elektrisch leitenden Schicht eines auf das innere Rohr aufgewickelten Kondensators und
- Fig.3: Bereich "B" aus Fig.1 der gleichen Anordnung in Vergrösserung,
- Fig.4: Bereich "A" aus Fig.1 in Vergrösserung, wobei der Kondensator mehrere Isolationsschichten und elektrisch leitende Schichten aufweist und
- Fig.5: Bereich "B" aus Fig.1 der gleichen Anordnung in Vergrösserung,
- Fig.6: Bereich "A" aus Fig.1 in Vergrösserung, wobei die unterste Isolationsschicht des Kondensators durch einen Metallschichtwiderstand und in
- Fig.7: durch ein halbleitendes Material überbrückt ist.

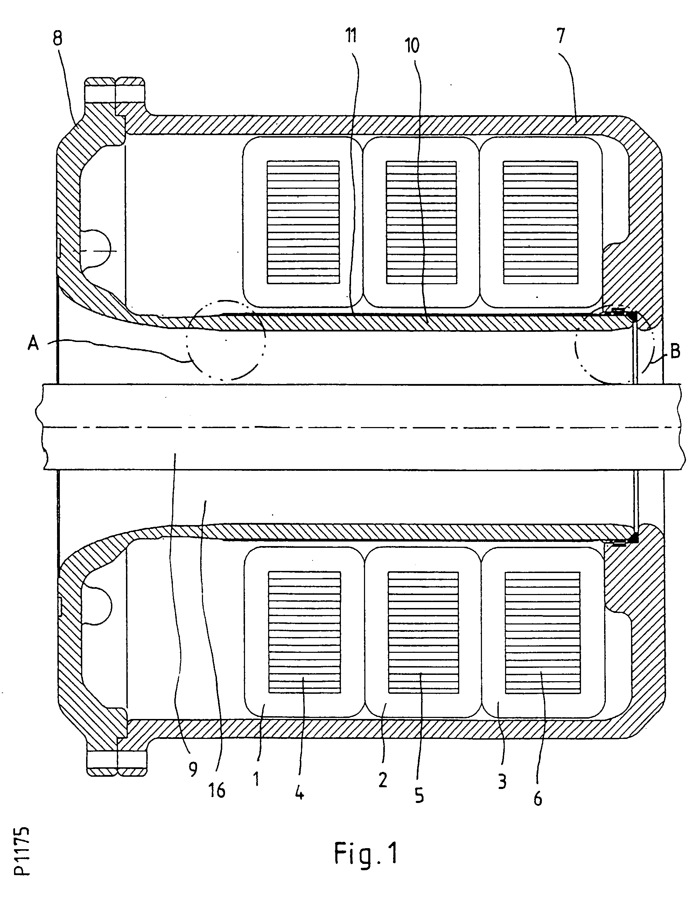

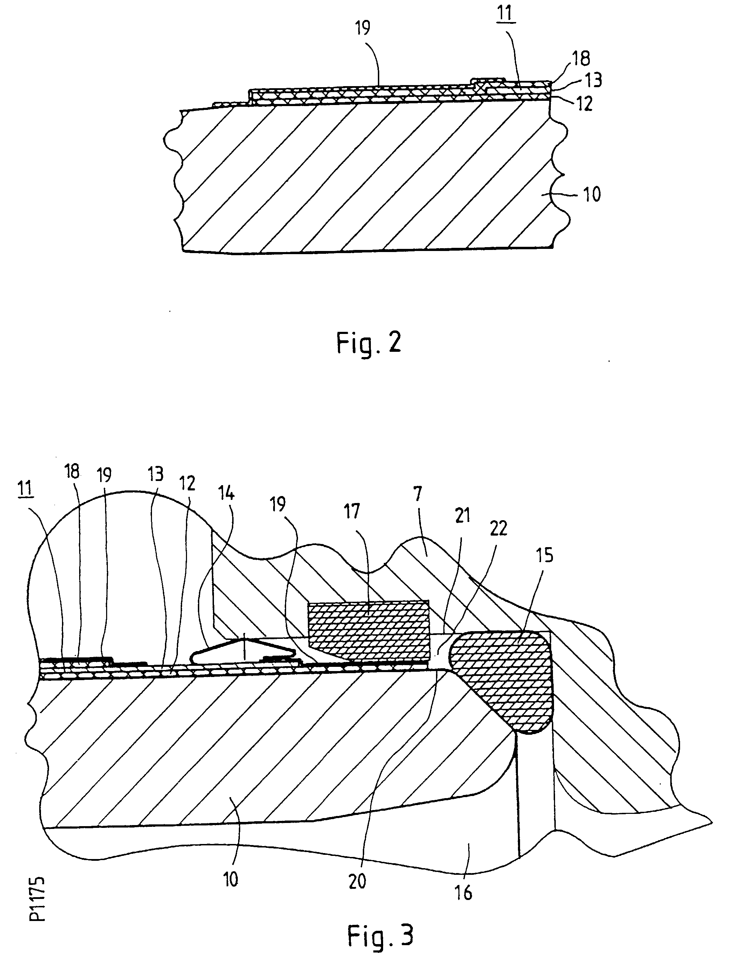

Der in Fig.1 in Längsschnitt dargestellte Ringkernstromwandler ist für den Einbau in eine in den Figuren nicht dargestellte metallgekapselte Hochspannungsschaltanlage vorgesehen. Es sind drei mit Sekundärwicklungen 1, 2, 3 versehene Ringkerne 4, 5, 6 vorhanden. Die Ringkerne 4, 5, 6 sind durch eine aus einer äusseren Kapselung 7 und aus einer inneren Kapselung 8 zusammengesetzte Kapselung umgeben und liegen in einem luftgefüllten Raum. In der Oeffnung der Ringkerne 4, 5, 6 verläuft ein für die Führung des Betriebsstromes bestimmter Primärleiter 9. Zwischen den Ringkernen 4, 5, 6 und dem Primärleiter 9 liegt ein am einen seiner beiden Enden mit der inneren Kapselung 8 und dadurch auch mit der übrigen Kapselung der gesamten Schaltanlage elektrisch leitend verbundenes und an den übrigen Stellen davon elektrisch isoliertes inneres Rohr 10. In Fig.1 sieht man einen Kondensator 11, wobei die Einzelheiten dieses Kondensators 11 in Fig.1 nicht erkennbar sind. Die Figuren 2 bis 7 zeigen vergrössert die Einzelheiten der durch die Doppelpunkt-Strich-Kreise markierten Bereiche "A" und "B" des inneren Rohres 10 und des Kondensators 11 mit verschiedenen Ausführungsvarianten. Fig.2 zeigt vergrössert den Bereich "A" und Fig.3 den Bereich "B" des inneren Rohres 10 mit einem Kondensator 11, der die auf das innere Rohr 10 aufgewickelte Isolationsschicht 12 und die darauf aufliegende und aufgewickelte biegsame elektrisch leitende Schicht 13 aufweist. Die elektrisch leitende Schicht 13 ist an ihrem der elektrischen Verbindungsstelle zwischen der inneren Kapselung 8 und dem inneren Rohr 10 abgekehrten Ende mit der äusseren Kapselung 7 elektrisch leitend verbunden, wie Fig.3 es zeigt. Zur elektrischen Verbindung der elektrisch leitenden Schicht 13 mit der äusseren Kapselung 7 ist eine auf die Schicht 13 aufgebrachte selbstklebende Kontaktfeder 14 vorgesehen. Die Kontaktfeder 14 ermöglicht eine einfache Montage des Stromwandlers mit Herstellung der erforderlichen elektrischen Verbindungen, indem das innere Rohr 10 der inneren Kapselung 8 mit dem Kondensator 11 in die mit den bewickelten Ringkernen 4, 5, 6 ausgerüstete äussere Kapselung 7 geschoben wird. Die Dichtung 15 schliesst dabei den den Primärleiter 9 führenden, gekapselten, mit einem unter Druck stehenden Isoliergas gefüllten Raum 16 hermetisch ab. Ein Zentrierring 17 führt den Endbereich des inneren Rohres 10. Die elektrisch leitende Schicht 13 des Kondensators 11 ist mit einer äusseren Isolation 18 aus Polyester mit einer Dicke von etwa 0,15 mm abgedeckt. Beide Endbereiche des Kondensators 11 sind mit einem Klebeband 19 abgeschlossen.

Der Kondensator 11 ermöglicht, dass zwischen den unter den Stromwandlerkernen 4, 5, 6 getrennten inneren und äusseren Kapselungen 7, 8 eine für den Schutz des Stromwandlers gegen den Einfluss steiler Wanderwellen ausreichende Kapazität erreicht werden kann. Die Herstellung des Kondensators 11 ist einfach und erfordert keine kostspielige Einrichtungen.

Die Isolationsschicht 12 des Kondensators 11 besteht aus einer einlagig aufgewickelten Polyesterfolie mit einer Dicke von etwa 0,4 mm. Auf diese Polyesterfolie ist eine elektrisch leitende Metallfolie 13 aus Kupfer mit einer Dicke von etwa 0,05 mm aufgebracht. Der Vorteil der Verwendung einer Polyesterfolie als Isolationsschicht 12 mit einer dünnen Metallfolie 13 besteht darin, dass der so hergestellte Kondensator 11 selbstheilend ist. Nach einem allfälligen Durchschlag in der Isolationsschicht 12 verbleibt bei diesem selbstheilenden Kondensator 11 keine elektrisch leitende oder halbleitende Verbindung zwischen den Anschlüssen des Kondensators 11, wodurch eine unzulässige Verfälschung des Sekundärstromes durch eine unbemerkte Kurzschlusswindung vermieden werden kann.

Wie aus Fig.3 hervorgeht, ist sowohl das innere Rohr 10 als auch die äussere Kapselung 7 zwischen der Dichtung 15 und dem Zentrierring 17 unisoliert. Zwischen der Stelle 20 des inneren Rohres 10 und der Stelle 21 der äusseren Kapselung 7 entsteht so im luftgefüllten Stromwandlergehäuse eine Schutzfunkenstrecke 22. Die Ansprechspannung dieser Schutzfunkenstrecke 22 liegt unterhalb der Spannungsfestigkeit der durch die Schutzfunkenstrecke 22 überbrückten Isolationsschicht 12. Durch diese Schutzfunkenstrecke 22 wird eine allfällige Beschädigung der Isolationsschicht 12 und so ein unzulässiger, durch eine unbemerkte Kurzschlusswindung verursachter Messfehler des Stromwandlers vermieden. Um die Wirksamkeit der Schutzfunkenstrecke 22 sicherzustellen, liegt die Ansprechspannung der Schutzfunkenstrecke 22 um 20% der Spannungsfestigkeit der überbrückten Isolationsschicht 12.

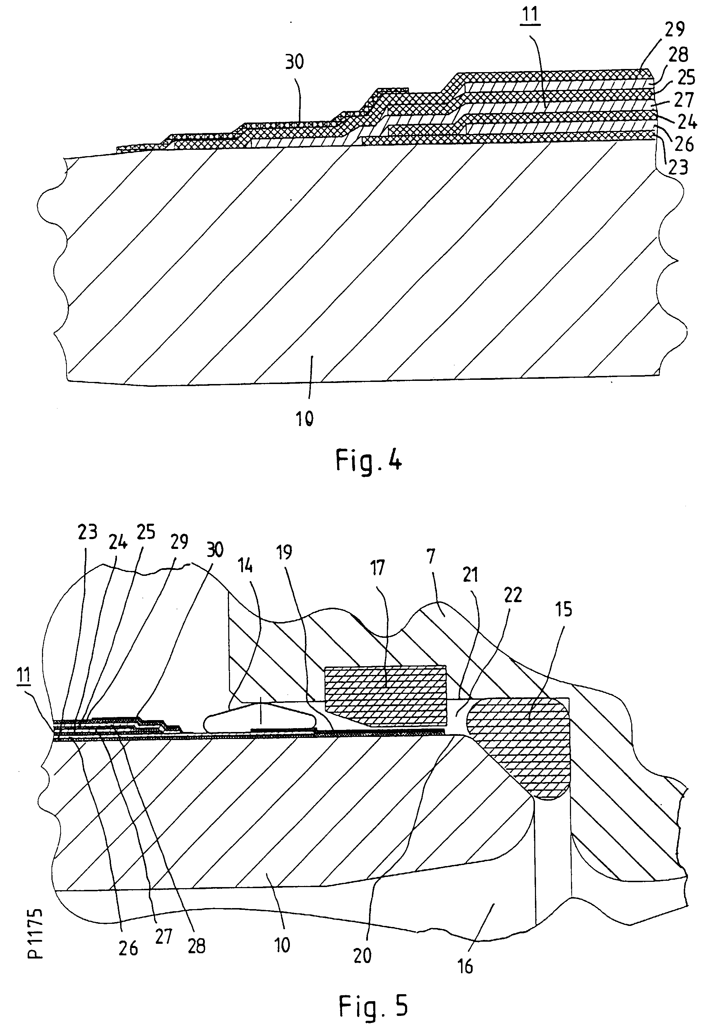

Die Figuren 4 und 5 zeigen die Bereiche "A" resp. "B" aus der Fig.1 in einer Vergrösserung mit einer weiteren Ausbildungsvariante des Kondensators 11. Zwischen den Figuren 4 und 5 besteht ein Masstabunterschied. Für die einander entsprechenden Teile wurden in diesen Figuren 4 und 5 die gleichen Bezugsziffern verwendet wie in den Figuren 1, 2 und 3. Bei der in den Figuren 4 und 5 gezeigten Variante des Kondensators 11 sind abwechslungsweise drei Isolationsschichten 23, 24, 25 und drei elektrisch leitende Schichten 26, 27, 28 auf das innere Rohr 10 aufgewickelt. Die innerste 26 und jede zweite darauf aufliegende elektrisch leitende Schicht 28 sind einerseits untereinander und anderseits über die Kontaktfeder 14 mit der äusseren Kapselung 7 elektrisch leitend verbunden, wie Fig.5 dies zeigt. Die zwischen den beiden Schichten 26, 28 liegende elektrisch leitende Schicht 27 ist mit dem inneren Rohr 10 elektrisch leitend verbunden, wie dies aus Fig.4 hervorgeht. Dieser Kondensator 11 ist durch die äussere Isolation 29 abgedeckt. Die beiden Endbereiche des Kondensators 11 sind mit einem Klebeband 30 abgeschlossen.

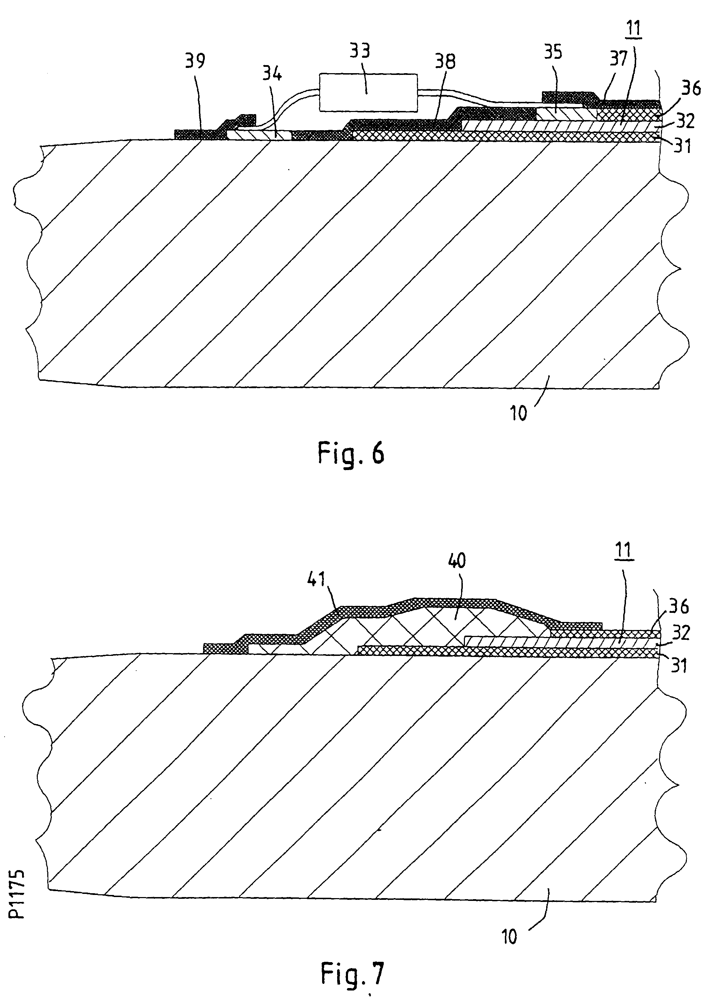

In Fig.6 ist der Bereich "A" aus der Fig.1 mit einer weiteren Variante des Kondensators 11, mit der inneren Isolationsschicht 31 und mit der darauf aufliegenden biegsamen elektrisch leitenden Schicht 32 dargestellt. Die Isolationsschicht 31 besteht aus einer aufgewickelten Polyesterfolie und die elekrisch leitende Schicht 32 aus einem Metallgeflecht aus Kupfer. Das Metallgeflecht begünstigt das Selbstheilungseffekt des Kondensators 11. Die Isolationsschicht 31 ist durch drei am Umfang gleichmässig verteilte ohm'sche Metallschichtwiderstände überbrückt. Die Anschlüsse der Metallschichtwiderstände 33 sind an den beiden offenen Metallringen 34, 35 angelötet, die mit dem inneren Rohr 10 resp. mit der elektrisch leitenden Schicht 32 des Kondensators 11 elektrisch leitend in Verbindung stehen. Die elektrisch leitende Schicht 32 des Kondensators 11 ist durch die äussere Isolation 36 aus Polyesterfolie abgedeckt. Die Endbereiche auch dieses Kondensators 11 sind durch Klebebandbandagen 37, 38, 39 abgeschlossen. Die Induktivität des um die Stromwandlerkerne 4, 5, 6 liegenden, aus den inneren und äusseren Kapselungen 8 und 7 zusammengesetzten Gehäuses und die Kapazität des Kondensators 11 ergeben ein schwingfähiges Gebilde. Durch eine allfällige Resonanz dieses Schwingkreises können unzulässig hohe Ueberspannungen entstehen. Die vorgesehenen Metallschichtwiderstände 33 dämpfen die angeregten Schwingungen und setzen die entstehenden Ueberspannungen herab. Die Erfahrung zeigt, dass ein zwischen den Metallringen 34, 35 messbarer ohm'scher Widerstand von 5 bis 60 Ohm für die Dämpfung der entstehenden Schwingungen ausreicht.

In Fig.7 ist eine für die Herstellung besonders günstige Variante des die Isolationsschicht 31 überbrückenden Widerstandes dargestellt. Dieser Widerstand besteht aus einem über das unisoliert vorstehende Ende der elektrisch leitenden Schicht 32 und über das innere Rohr 10 angebrachten und diese verbindenden halbleitenden Material 40. Der Endbereich dieses Kondensators 11 mit dem halbleitenden Material 40 ist wiederum mit einer Klebebandbandage 41 abgeschlossen.

Es versteht sich von selbst, dass der Kondensator 11 auch aus einem beidseitig mit je einer elektrisch leitenden Schicht versehenen Isolierfolie hergestellt werden kann, die auf das innere Rohr 10 mehrlagig aufgewickelt ist.

## Patentansprüche

1. Ringkernstromwandler zum Einbau in eine metallgekapselte Hochspannungsschaltanlage mit mindestens einem mit Sekundärwicklung (1, 2, 3) versehenen innerhalb der aus einer inneren Kapselung (8) und aus einer äusseren Kapselung (7) zusammengesetzten Kapselung (7, 8) angeordneten Ringkern (4, 5, 6) und einem in der Oeffnung des Ringkernes (4, 5, 6) verlaufenden Primärleiter (9), wobei zwischen dem Ringkern (4, 5, 6) und dem Primärleiter (9) ein am einen Ende mit der inneren Kapselung (8) elektrisch leitend verbundenes und an den übrigen Stellen davon elektrisch isoliertes, inneres Rohr (10) und eine an der der elektrischen Verbindungsstelle zwischen der inneren Kapselung (8) und dem inneren Rohr (10) abgekehrten Seite des Ringkernes (4, 5, 6) mit der äusseren Kapselung (7) direkt elektrisch leitend verbundene, das innere Rohr (10) mindestens teilweise überlappende, elektrisch leitende Schicht (13, 26, 28, 32) vorgesehen sind, wobei der Ueberlappungsteil der leitenden Schicht (13, 26, 28, 32), eine darunterliegende Isolation (12, 23, 24, 25) und das innere Rohr (10) einen Kondensator (11) mit einer für das ungehinderte Weiterleiten steiler Wanderwellen ausreichenden Kapazität bilden, **dadurch gekennzeichnet**, dass der auf dieser Weise gebildete Kondensator (11), mindestens eine auf das innere Rohr (10) aufgewickelte Isolationsschicht (12, 23, 24, 25, 31) und mindestens eine darauf aufliegende und aufgewickelte biegsame elektrisch leitende Schicht (13, 26, 27, 28, 32) aufweist, wobei auf der innersten elektrisch leitenden Schicht (13, 26,) des Kondensators (11) zum Anschluss dieser elektrisch leitenden Schicht (13,26) an die äussere Kapselung (7) am der Verbindungsstelle zwischen der inneren Kapselung (8) und dem inneren Rohr (10) abgekehrten Teil der elektrisch leitenden Schicht (13,26) eine Kontaktfeder (14) angebracht ist.

2. Ringkernstromwandler nach Anspruch 1, **dadurch gekennzeichnet**, **dass** die Isolationsschicht (12, 23, 24, 25, 31) aus einer mindestens einlagig gewickelten Polyesterfolie besteht.

3. Ringkernstromwandler nach Anspruch 1, **dadurch gekennzeichnet, dass** die elektrisch leitende Schicht (13, 26, 27, 28, 32) ein Metallgeflecht ist.

4. Ringkernstromwandler nach Anspruch 1, **dadurch gekennzeichnet**, **dass** die elektrisch leitende Schicht (13, 26, 27, 28, 32) eine Metallfolie ist.

5. Ringkernstromwandler nach einem der Ansprüche 1 bis 4, **dadurch gekennzeichnet dass** der Kondensator (11) mehrere abwechslungsweise aufgewickelte Isolationsschichten (23, 24, 25) und darauf aufliegende und aufgewickelte elektrisch leitende Schichten (26, 27, 28) aufweist, wobei die innerste (26) und jede zweite darauf aufliegende elektrisch leitende Schicht (28) einerseits untereinander und anderseits über die Kontaktfeder mit der äusseren Kapselung (7), und die übrigen elektrisch leitenden Schichten (27) mit dem inneren Rohr (10) elektrisch leitend verbunden sind.

6. Ringkernstromwandler nach einem der Ansprüche 1 bis 5, **dadurch gekennzeichnet**, **dass** das der elektrischen Verbindungsstelle zwischen der inneren Kapselung (8) und dem inneren Rohr (10) abgekehrte Ende des inneren Rohres (10) mit der gegenüberliegenden äusseren Kapselung (7) eine Schutzfunkenstrecke (22) bildet, deren Ansprechspannung unterhalb der Spannungsfestigkeit der durch die Schutzfunkenstrecke (22) überbrückten Isolationsschicht (12, 23, 24, 25, 31) des Kondensators (11) liegt.

7. Ringkernstromwandler nach Anspruch 6, **dadurch gekennzeichnet**, **dass** die Ansprechspannung der Schutzfunkenstrecke (22) zwischen 15% und 30% der Spannungsfestigkeit der überbrückten Isolationsschicht (12, 23, 24, 25, 31) liegt.

8. Ringkernstromwandler nach Anspruch 1, **dadurch gekennzeichnet**, **dass** die zwischen der zum Anschluss der innersten elektrisch leitenden Schicht (13,26) an die äussere Kapselung (7) am der Verbindungsstelle zwischen der inneren Kapselung (8) und dem inneren Rohr (10) abgekehrten Teil der innersten elektrisch leitenden Schicht (13,26) vorgesehenen, innersten elektrisch leitenden Schicht (13, 26) des Kondensators (11) und der äusseren Kapselung (7) liegende Kontaktfeder (14) auf die innerste Schicht (13, 26) selbstklebend aufgebracht ist.

9. Ringkernstromwandler nach einem der Ansprüche 1 bis 8, **dadurch gekennzeichnet**, **dass** mindestens eine Isolationsschicht (31) des Kondensators (11) durch einen ohm'schen Widerstand überbrückt ist.

10. Ringkernstromwandler nach Anspruch 9, **dadurch gekennzeichnet**, **dass** der Wert des ohm'schen Widerstandes zwischen 5 und 60 Ohm liegt.

11. Ringkernstromwandler nach einem der Ansprüche 9 bis 10, **dadurch gekennzeichnet**, **dass** der ohm'sche Widerstand aus einem über das unisoliert vorstehende Ende der elektrisch leitenden Schicht (32) des Kondensators (11) und über das innere Rohr (10) angebrachten und diese verbindenden halbleitenden Material (40) besteht.

12. Ringkernstromwandler nach einem der Ansprüche 9 bis 10, **dadurch gekennzeichnet**, **dass** der eine Isolationsschicht (31) des Kondensators (11) über-brückende ohm'sche Widerstand aus mehreren am Umfang gleichmässig verteilten Metallschichtwiderständen (33) besteht.

## Claims

1. Toroidal-core transformer for incorporation into a metal-encapsulated high-voltage switching station, with at least one toroidal core (4, 5, 6) fitted with a secondary winding (1, 2, 3) and positioned within the compound encapsulation (7, 8) consisting of an inner encapsulation (8) and an outer encapsulation (7) and with a primary conductor (9) running in the opening of the toroidal core (4, 5, 6), wherein between the toroidal core (4, 5, 6) and the primary conductor (9) an inner tube (10) is provided for that is electrically conductively connected at one end to the inner encapsulation (8) and at the remaining points is insulated from it and an electrically conducting layer (13, 26, 28, 32) is provided for at that side of the toroidal core (4, 5, 6) that faces away from the electrical junction point between the inner encapsulation (8) and the inner tube (10) and that is directly electrically conductively connected to the outer encapsulation (7) and at least partly overlaps the inner tube (10), wherein the overlapping part of the conducting layer (13, 26, 28, 32), underlying insulation (12, 23, 24, 25) and the inner tube (10) form a capacitor (11) having sufficient capacitance for the unhindered onward transmission of the steep travelling waves, characterized in that the capacitor (11) thus formed displays at least one insulation layer (12, 23, 24, 25, 31) wound on the inner tube (10) and at least one flexible electrically conductive layer (13, 26, 27, 28, 32) lying on top of it and wound on it, wherein on the innermost electrically conductive layer (13, 26) of the capacitor (11) a contact spring (14) is positioned in order to connect this electrically conductive layer (13, 26) to the outer encapsulation (7) at that part of the electrically conductive layer (13, 26) that faces away from the junction point between the inner encapsulation (8) and the inner tube (10).

2. Toroidal-core transformer as claimed in claim 1, characterized in that the insulation layer (12', 23, 24, 25, 31) consists of a polyester foil wound in at least one layer.

3. Toroidal-core transformer as claimed in claim 1, characterized in that the electrically conductive layer (13,' 26, 27, 28, 32) is a metal braid.

4. Toroidal-core transformer as claimed in claim 1, characterized in that the electrically conductive layer (13, 26, 27, 28, 32) is a metal foil.

5. Toroidal-core transformer as claimed in one of the claims 1 to 4, characterized in that the capacitor (11) displays several alternately wound insulation layers (23, 24, 25) and wound electrically conductive layers (26, 27, 28) lying thereon, wherein the innermost (26) and every alternate electrically conductive layer lying thereon (28) are, on the one hand, electrically conductively connected to each other and, on the other hand, electrically conductively connected via the contact spring to the external encapsulation (7), and the remaining electrically conductive layers (27) are electrically conductively connected to the inner tube (10).

6. Toroidal-core transformer as claimed in one of the claims 1 to 5, characterized in that the electrical junction point between the inner encapsulation (8) and that end of the inner tube (10) that faces away from the inner tube (10), together with the outer encapsulation (7) opposite to it, forms a protective spark gap (22) whose threshold voltage lies below the dielectric strength of the insulation layer (12, 23, 24, 25, 31) of the capacitor (11) that is bridged by the protective spark gap (22).

7. Toroidal-core transformer as claimed in claim 6, characterized in that the threshold voltage of the protective spark gap (22) lies between 15% and 30% of the dielectric strength of the bridged insulation layer (12, 23, 24, 25, 31).

8. Toroidal-core transformer as claimed in claim 1, characterized in that the contact spring (14) lying between the capacitor (11)'s innermost electrically conductive layer (13, 26), which is provided for in order to connect the innermost electrically conductive layer (13, 26) to the outer encapsulation (7) at that part of the innermost electrically conductive layer (13, 26) that faces away from the junction point between the inner encapsulation (8) and the inner tube (10), and the external encapsulation (7) is self-adhesively attached to the innermost layer (13, 26).

9. Toroidal-core transformer as claimed in one of the claims 1 to 8, characterized in that at least one insulation layer (31) of the capacitor (11) is bridged by an ohmic resistance.

10. Toroidal-core transformer as claimed in claim 9, characterized in that the value of the ohmic resistance lies between 5 and 60 ohms.

11. Toroidal-core transformer as claimed in one of the claims 9 to 10, characterized in that the ohmic resistance consists of a semiconducting material (40) attached over the uninsulated projecting end of the electrically conductive layer (32) of the capacitor (11) and over the inner tube (10), connecting these.

12. Toroidal-core transformer as claimed in one of the claims 9 to 10, characterized in that the ohmic resistance bridging one of the insulation layers (31) of the capacitor (11) consists of several metal film resistors (33) uniformly distributed around the circumference.

## Revendications

1. Transformateur d'intensité à noyau annulaire pour montage dans une installation de commutation à haute tension à enceinte métallique, comportant au moins un noyau annulaire (4, 5, 6) muni d'un bobinage secondaire (1, 2 3) et disposé à l'intérieur de l'enceinte (7, 8) composée composée d'une enceinte intérieure (8) et d'une enceinte extérieure (7), ainsi qu'un conducteur primaire (9) passant dans l'ouverture du noyau annulaire (4, 5, 6), dans le cas duquel, entre le noyau annulaire (4, 5, 6) et le conducteur primaire (9) sont prévus un tube intérieur (10) qui, à une extrémité, est relié, avec conduction électrique, à l'enceinte intérieure (8) et, aux autres endroits, en est électriquement isolé, ainsi qu'une couche électriquement conductrice (13, 26, 28, 32) directement reliée, avec conduction électrique, à l'enceinte extérieure (7) du côté du noyau annulaire (4, 5, 6) éloigné de l'endroit de la liaison électrique entre l'enceinte intérieure (8) et le tube intérieur (10) et recouvrant au moins partiellement le tube intérieur (10), dans le cas duquel la partie de la couche conductrice (13, 26, 28, 32) en recouvrement, une isolation (12, 23, 24, 25) située par-dessous et le tube intérieur (10) forment un condensateur (11) d'une capacité suffisante pour interdire la propagation d'ondes transitoires à front raide, caractérisé par le fait que le condensateur (11) formé de cette façon présente au moins une couche isolante (12, 23, 24, 25, 31) bobinée sur le tube intérieur (10) et au moins une couche flexible, électriquement conductrice, (13, 26, 27, 28, 32) placée et bobinée par-dessus, étant précisé que, sur la couche électriquement conductrice la plus intérieure (13, 26) du condensateur (11), un ressort de contact (14) est rapporté pour le raccordement de cette couche électriquement conductrice (13, 26) à l'enceinte extérieure (7), à la portion de la couche électriquement conductrice (13, 26) éloignée de l'endroit de la liaison entre l'enceinte intérieure (8) et le tube intérieur (10).

2. Transformateur d'intensité à noyau annulaire selon la revendication 1, caractérisé par le fait que la couche isolante (12, 23, 24, 25, 31) est constituée d'une feuille de polyester, au moins monocouche, bobinée.

3. Transformateur d'intensité à noyau annulaire selon la revendication 1, caractérisé par le fait que la couche électriquement conductrice (13, 26, 27, 28, 32) est un treillis métallique.

4. Transformateur d'intensité à noyau annulaire selon la revendication 1, caractérisé par le fait que la couche électriquement conductrice (13, 26, 27, 28, 32) est une feuille de métal.

5. Transformateur d'intensité à noyau annulaire selon l'une des revendications 1 à 4, caractérisé par le fait que le condensateur (11) présente alternativement plusieurs couches isolantes (23, 24, 25) bobinées et des couches électriquement conductrices (26, 27, 28) placées par-dessus et bobinées, étant précisé que la couche la plus intérieure (26) et une (28) sur deux des couches électriquement conductrices placées par-dessus sont reliées d'une part entre elles et d'autre part, par l'intermédiaire du ressort de contact, avec l'enceinte extérieure (7) et que les autres couches électriquement conductrices 27) sont reliées, avec conduction électrique, au tube intérieur (10).

6. Transformateur d'intensité à noyau annulaire selon l'une des revendications 1 à 5, caractérisé par le fait que l'extrémité du tube intérieur (10) éloignée de l'endroit de la liaison électrique entre l'enceinte intérieure (8) et le tube intérieur (10) forme une ligne de protection anti-arc (22) dont la tension de réaction est inférieure à la rigidité diélectrique de la couche isolante (12, 23, 24, 25, 31) pontée par la ligne de protection anti-arc (22).

7. Transformateur d'intensité à noyau annulaire selon la revendication 6, caractérisé par le fait que la tension de réaction de la ligne de protection anti-arc (22) vaut entre 15% et 30% de la rigidité diélectrique de la couche isolante pontée (12, 23, 24, 25, 31).

8. Transformateur d'intensité à noyau annulaire selon la revendication 1, caractérisé par le fait que le ressort de contact (14) situé entre la couche électriquement conductrice la plus intérieure (13, 26) du condensateur (Il) et prévue pour le raccordement à la portion de la couche électriquement conductrice la plus intérieure (13, 26) éloignée du point de la liaison entre l'enceinte intérieure (8) et le tube intérieur (10) est rapporté sur la couche (13, 26) par autocollage.

9. Transformateur d'intensité à noyau annulaire selon l'une des revendications 1 à 8, caractérisé par le fait qu'au moins une couche isolante (31) du condensateur (11) est pontée par une résistance ohmique.

10. Transformateur d'intensité à noyau annulaire selon la revendication 9, caractérisé par le fait que la valeur de la résistance ohmique est entre 5 et 60 ohms.

11. Transformateur d'intensité à noyau annulaire selon l'une des revendications 9 à 10, caractérisé par le fait que la résistance ohmique est constituée d'un matériau semiconducteur (40) rapporté le long de l'extrémité avant, non isolée, de la couche électriquement conductrice (32) du condensateur (11) et le long du tube intérieur (10) et les reliant.

12. Transformateur d'intensité à noyau annulaire selon l'une des revendications 9 à 10, caractérisé par le fait que la résistance ohmique qui ponte une couche isolante (31) du condensateur (11) est constituée de plusieurs résistances à couche métallique (33) régulièrement réparties sur la périphérie.
